# EUROPEAN PATENT APPLICATION

(11) **EP 4 800 827 A1**
(43) Date of publication of application: **02.09.2026**
(21) Application number: 25867189.0
(22) Date of filing: 06.08.2025
(51) Int. Cl.: H01M 50/367

(54) **BATTERY MODULE, AND BATTERY PACK AND VEHICLE INCLUDING SAME**

(30) Priority: 25.10.2024 KR 20240147809
(71) Applicant: LG ENERGY SOLUTION, LTD., Seoul 07335 (KR)
(72) Inventor: SHIN, Kiseong, Daejeon 34122 (KR); KIM, Seho, Daejeon 34122 (KR); HWANG, Sangil, Daejeon 34122 (KR); LEE, Dongwoo, Daejeon 34122 (KR)
(74) Representative: BCKIP Part mbB
(86) International application number: PCT/KR2025/011751
(87) International publication number: WO 2026/089227

(57) **Abstract**

A battery module according to one embodiment of the present invention comprises: a cell assembly including a plurality of battery cells; a busbar frame assembly electrically connecting the plurality of battery cells; a module case accommodating the cell assembly; and a potting resin provided on a bottom surface of a space between one end of the cell assembly and the busbar frame assembly, the potting resin being configured to expand upon mixing with a curing agent.

## Description

### [TECHNICAL FIELD]

The present invention relates to battery module, battery pack and vehicle including the same.

### [BACKGROUND ART]

Secondary batteries, unlike primary batteries which are non-rechargeable, are rechargeable batteries capable of charge and discharge cycles. They are widely utilized not only in portable electronic devices but also in electric vehicles (EVs) and hybrid electric vehicles (HEVs) driven by electric power sources.

Types of secondary batteries widely used today include lithium-ion batteries, lithium polymer batteries, nickel-cadmium batteries, nickel-hydrogen batteries, nickel-zinc batteries, and the like. The operating voltage of a single secondary battery cell, i.e., a unit battery cell, is approximately 2.5 V to 4.6 V. Accordingly, when a higher output voltage is required, a battery pack may be formed by connecting a plurality of battery cells in series. In addition, a battery pack may be configured by connecting a plurality of battery cells in parallel depending on the charge/discharge capacity requirements. Therefore, the number of battery cells incorporated in the battery pack may be variously set according to the required output voltage or charge/discharge capacity.

When a plurality of battery cells are connected in series and/or in parallel to form a battery pack, it is common practice to first configure a battery module including at least one battery cell, preferably a plurality of battery cells, and then construct a battery pack by combining at least one such battery module with other components. Here, a battery module refers to a unit composed of a plurality of battery cells connected in series and/or in parallel, while a battery pack refers to a structure in which a plurality of battery modules are interconnected in series and/or in parallel to enhance capacity and output.

In conventional battery modules, when venting gas is generated within the battery cell, the gas is discharged through the sealing portion of the pouch. Specifically, the venting gas is discharged not only through the venting portion disposed at the side edge opposite the folded side that intersects the front and rear edge portions, but also through the cell terrace, which constitutes the sealing portion on the side where the electrode leads protrude. In this case, the venting gas is discharged toward the busbar frame assembly and/or end plates and/or an isolation cover, which may include plastic material. Accordingly, when thermal runaway of a battery cell occurs within the battery module, there exists a risk that the busbar frame assembly and/or end plates and/or isolation cover disposed at the front and rear of the battery module may undergo melting due to venting gas discharged through the cell terrace. As a result, a problem arises in that molten particles or the like are discharged outside the battery module, thereby inducing thermal propagation within the battery pack.

### [SUMMARY OF THE INVENTION]

### [TECHNICAL PROBLEM]

It is an object of the present invention to guide venting gas toward the upper side of a battery module.

Another object of the present invention is to prevent short circuits caused by spatter and electrode discharge.

Furthermore, yet another object of the present invention is to prevent structural collapse of the busbar frame and/or end plates.

A further object of the present invention is to prevent thermal propagation from inside the battery pack to a battery module located on the opposite side of the battery module in the longitudinal direction.

However, the technical objects to be solved by the present invention are not limited to those set forth above, and other objects not expressly mentioned will be clearly understood by those skilled in the art from the following description of the invention.

### [SOLUTION TO THE PROBLEM]

In one embodiment of the present invention devised to achieve the foregoing technical objects, there is provided a battery module comprising: a cell assembly including a plurality of battery cells; a busbar frame assembly electrically connecting the plurality of battery cells; a module case accommodating the cell assembly; and a potting resin disposed on a bottom surface of a space between one end of the cell assembly and the busbar frame assembly, the potting resin being configured to expand upon mixing with a curing agent.

In one aspect of the present invention, the battery cell may include an electrode assembly, a receiving portion for receiving the electrode assembly, a sealing portion formed around the receiving portion, and a pair of electrode leads connected to the electrode assembly and protruding outward from the sealing portion.

In this case, the sealing portion may include a cell terrace, which is a sealing portion on the side where the pair of electrode leads protrude.

Preferably, the venting gas may be configured to be discharged only through an area of the sealing portion of the battery cell, excluding the cell terrace.

In another aspect of the present invention, the busbar frame assembly may comprise: a busbar frame disposed at least at one of the front and rear portions of the cell assembly and formed with a plurality of slits through which electrode leads of the battery cells pass; and a busbar formed of an electrically conductive material and configured to be welded to the electrode leads extending outward through the plurality of slits of the busbar frame.

In another aspect of the present invention, the potting resin may be included in a region provided with the cell terrace.

In one aspect of the present invention, the battery module is characterized in that the potting resin is a two-component resin having fire resistance.

In another aspect of the present invention, the potting resin may be configured to physically seal the entirety of one end of the battery cell upon completion of expansion.

In another aspect of the present invention, the module case may further comprise end plates coupled to the front and rear sides thereof.

Meanwhile, the present invention provides a method for manufacturing a battery module, comprising: a first step of fixing a plurality of battery cells to a busbar frame assembly; a second step of mounting the plurality of battery cells together with the busbar frame assembly into a module case of the battery module; a third step of coupling end plates to the front and rear of the module case; and a fourth step of applying a potting resin, configured to expand when mixed with a curing agent, onto a bottom surface of the module case through a mixing nozzle.

Preferably, the mixing nozzle may be inserted into a region where the cell terrace is located on the electrode lead side of the battery cell.

Meanwhile, the present invention can provide a battery pack comprising at least one battery module according to the aforementioned embodiment.

In addition, the present invention can provide a vehicle comprising at least one battery pack according to the aforementioned embodiment.

### [ADVANTAGEOUS EFFECTS OF THE INVENTION]

According to the present invention, top venting can be achieved smoothly by physically sealing venting gas and/or flames generated toward the cell terrace side of a battery cell and guiding the venting toward the upper side, thereby ensuring stable venting operation.

In addition, according to the present invention, venting gas and/or flames directed toward the busbar frame and/or end plates may be physically blocked, thereby preventing short-circuiting caused by spatter and electrode discharge.

Furthermore, according to the present invention, structural collapse of the busbar frame and/or end plates may be prevented.

In addition, according to the present invention, thermal propagation to a battery module disposed on the opposite side in the longitudinal direction within the battery pack may be prevented.

However, the advantageous effects of the present invention are not limited to those described above, and other technical effects not explicitly mentioned will be clearly understood by those of ordinary skill in the art from the following description.

### [BRIEF DESCRIPTION OF DRAWINGS]

The accompanying drawings, which are incorporated in and constitute a part of this specification, illustrate preferred embodiments of the present invention and, together with the detailed description set forth below, serve to further clarify the technical idea of the present invention. However, the present invention should not be construed as being limited to the matters illustrated in these drawings.
FIG. 1 is a view illustrating a battery module according to one embodiment of the present invention.
FIG. 2 is an exploded perspective view of the battery module shown in FIG. 1.
FIG. 3 is a view illustrating a battery cell according to one embodiment of the present invention.
FIG. 4 is a cross-sectional view of a battery module taken along a horizontal direction according to one embodiment of the present invention.
FIG. 5 is a cross-sectional view of a battery module taken along a vertical direction according to one embodiment of the present invention.
FIG. 6 is a view illustrating the area where a cell terrace of a battery module according to one embodiment of the present invention is located.
FIG. 7 is a comparative example of the present invention.
FIG. 8 is a view illustrating the state of a potting resin before expansion included in a battery module according to one embodiment of the present invention.
FIG. 9 is a view illustrating the state of a potting resin after expansion included in a battery module according to one embodiment of the present invention.
FIG. 10 is a view illustrating a process of injecting potting resin into a battery module according to one embodiment of the present invention.
FIG. 11 is a view illustrating a process of injecting potting resin into a battery module according to one embodiment of the present invention from a different direction from that shown in FIG. 10.
FIG. 12 is a view illustrating the state of a potting resin after expansion included in a battery module according to one embodiment of the present invention.
FIG. 13 is a view illustrating a battery pack including the battery module of FIG. 1.
FIG. 14 is a view illustrating a vehicle including the battery pack of FIG. 13.

### [MODES FOR CARRYING OUT THE INVENTION]

The advantages and features of the present invention, and the methods of achieving them, will become apparent with reference to the embodiments described in detail below in conjunction with the accompanying drawings. However, the present invention is not limited to the embodiments disclosed herein but may be implemented in various forms. These embodiments are provided only to ensure that the disclosure of the present invention is complete and to fully inform a person of ordinary skill in the art of the scope of the invention. The present invention is defined only by the scope of the claims. Accordingly, in some embodiments, well-known process steps, device structures, and technologies may not be described in detail to avoid obscuring the present invention. Throughout the specification, like reference numerals refer to like elements.

In the drawings, the thicknesses of layers and regions may be exaggerated to clearly show multiple layers and regions. Throughout the specification, similar parts are designated by the same reference numerals. When an element such as a layer, film, region, or plate is referred to as being "on" another element, it can be directly on the other element or intervening elements may be present. In contrast, when an element is referred to as being "directly on" another element, it is to be understood that there are no intervening elements present. Similarly, when an element is referred to as being "under" another element, it can be directly under the other element or intervening elements may be present. Conversely, when an element is referred to as being "directly under" another element, it is to be understood that there are no intervening elements present.

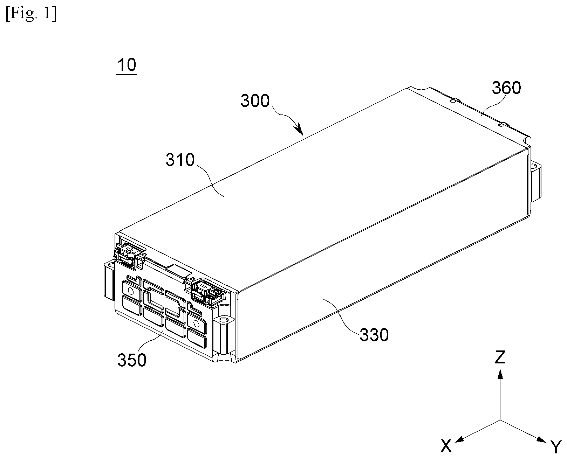

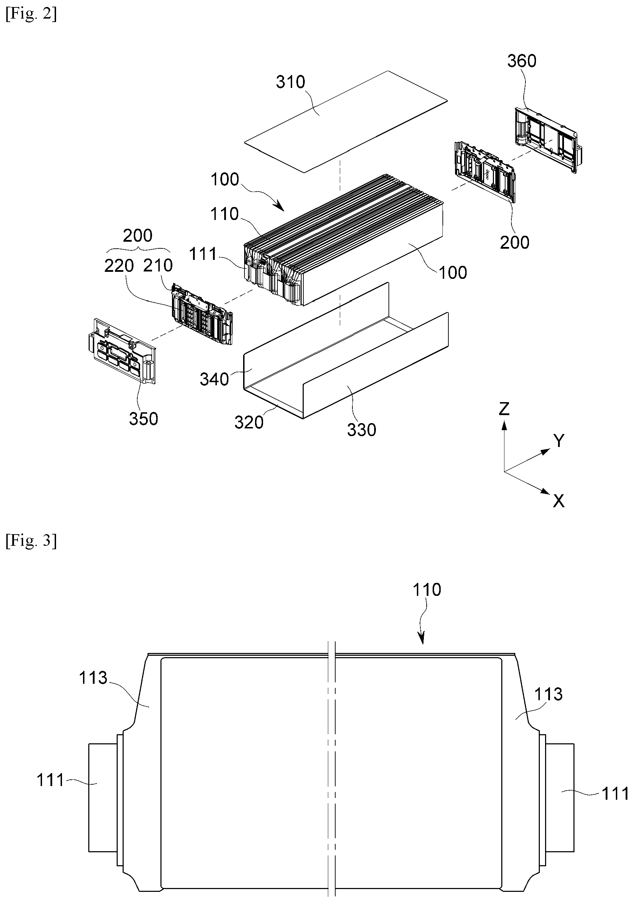

FIG. 1 is a view illustrating a battery module (10) according to one embodiment of the present invention, and FIG. 2 is an exploded perspective view of the battery module (10) shown in FIG. 1.

Referring to FIGS. 1 and 2, a battery module (10) according to one embodiment of the present invention comprises a cell assembly (100), a busbar frame assembly (200), a module case (300), and a potting resin (P). The battery module (10) may further comprise end plates (350, 360) and/or an isolation cover (400).

The cell assembly (100) may include a plurality of battery cells (110). The battery cell (110) may be a secondary battery, and may be, for example, a pouch-type battery cell (110). However, the present invention is not limited to this type of battery cell (110); other types of battery cells (110), such as cylindrical or prismatic cells, may also be employed in the battery module (10). The battery cell (110) of the present invention can be applied without any restrictions on the cell form-factor.

The plurality of battery cells (110) may be stacked in at least one direction. More specifically, the plurality of battery cells (110) may be arranged in at least a horizontal direction. The plurality of battery cells (110) may be configured to be arranged side-by-side in a horizontal direction while in an upright orientation. For example, with reference to FIG. 2, the plurality of battery cells (110) may be configured to be arranged side-by-side in a horizontal direction while in an upright orientation. The above cell assembly (100) can be configured by vertically stacking these battery cells (110) on the ground in a horizontal direction. Hereinafter, each of the plurality of battery cells (110) will be described in greater detail.

FIG. 3 is a drawing for explaining a battery cell (110) according to one embodiment of the present invention.

Hereinafter, an exemplary case in which the battery cell (110) is a pouch-type cell will be described with reference to FIG. 3. Referring to FIG. 3, the battery cell (110) may comprise an electrode assembly, a receiving portion configured to receive the electrode assembly, a sealing portion formed around the receiving portion, and a pair of electrode leads (111) connected to the electrode assembly and extending outward from the sealing portion.

The pair of electrode leads (111) may be coupled with electrode tabs (not shown) provided in the electrode assembly and may extend outward from the sealing portion through the sealing portion. The pair of electrode leads (111) may have a shape extending in the longitudinal direction of the battery cell (110). The pair of electrode leads (111) may extend in the same direction or in opposite directions from each other.

Referring to FIG. 3, the battery cell (110) may be configured to discharge venting gas through an upper sealing portion. The sealing portion may be provided with a venting portion formed to prevent an increase in internal pressure due to gas generated inside the battery cell (110). The venting portion may be formed in a part of the sealing portion and may be configured as a structurally weaker region than the surrounding portion, so as to be readily ruptured when internal pressure is applied. The venting portion may be, for example, a region formed with a weaker seal than the surrounding portion.

In one aspect of the present invention, in the case of a battery cell (110) in which an electrode assembly is packaged by folding a single pouch sheet, three sealing portions may be provided. Specifically, three sealing portions may be disposed at the front edge portion and the rear edge portion where the electrode lead (111) protrudes, and at a side edge portion intersecting the front and rear edge portions and located on the opposite side of the folded side. Referring to FIG. 3, the side edge portion that intersects the front and rear edge portions and is located on the opposite side of the folded side may be oriented upward. In this case, the venting portion may be formed at the side edge portion intersecting the front and rear edge portions and disposed on the opposite side of the folded side.

According to this structure, venting gas generated from the battery cell (110) may be discharged through the venting portion. That is, gas generated inside the battery cell (110) may be discharged to the exterior of the battery cell (110) through a venting portion formed at an upper end of the battery cell (110). That is, according to this structure, high-temperature gas and flame within the module may be smoothly discharged to the exterior of the battery cell (110).

In another aspect of the present invention, the sealing portion may include a cell terrace (113), which is a sealing portion disposed on a side where the electrode lead (111) protrudes. That is, among the sealing portions, the sealing portion on the side where the electrode lead (111) protrudes is referred to as a cell terrace (113).

In this case, the venting gas may be configured to be discharged only through a sealing portion of the battery cell (110), excluding the cell terrace (113). In other words, the venting gas may be configured to be discharged only through the venting portion of the battery cell (110). That is, referring to FIG. 2, the cell terrace (113) is arranged to face the front-rear direction of the battery module (10), and the venting portion is arranged to face an upper direction of the battery module (10). In this case, when venting gas is generated inside the battery cell (110), the venting gas may be discharged through the venting portion of the battery cell (110), rather than the cell terrace (113), i.e., through an upper portion of the battery cell (110) as illustrated in FIG. 2. This is referred to as a top venting structure, and according to this configuration of the present invention, the top venting structure may be readily achieved.

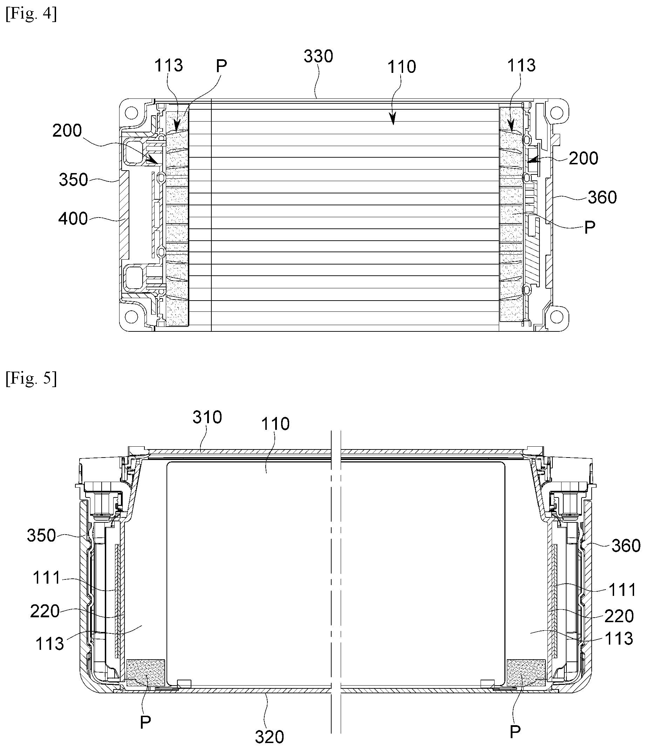

According to this configuration, deformation and/or fracture of the front and rear structures of the battery module (10) due to high-temperature venting gas may be prevented. If the high-temperature venting gas is discharged toward the cell terrace (113), the venting gas is directed toward the end plates (350, 360) and/or the busbar frame (210) disposed to face the cell terrace (113). In this case, the end plates (350, 360) and/or the busbar frame (210) may comprise, for example, a plastic material vulnerable to heat. Accordingly, if the high-temperature venting gas comes into contact with the end plates (350, 360) and/or the busbar frame (210), the end plates (350, 360) and/or the busbar frame (210) may undergo melting. As a result, thermal propagation within the battery pack may be induced. On the other hand, according to the present invention, since high-temperature venting gas is not discharged toward the cell terrace (113), deformation and/or melting and/or breakage of the end plates (350, 360) and/or the busbar frame (210) may be effectively prevented. Meanwhile, a specific structure in which the venting gas is discharged through a portion other than the cell terrace (113) side will be described in detail hereinafter with reference to FIGS. 4 to 9.

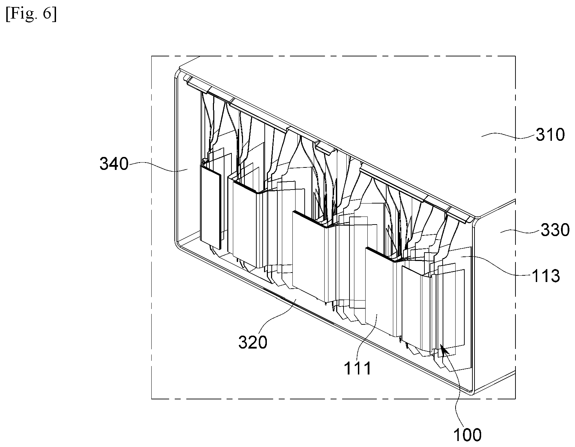

FIG. 4 is a cross-sectional view of a battery module (10) taken along a horizontal direction according to one embodiment of the present invention, and FIG. 5 is a cross-sectional view of a battery module (10) taken along a vertical direction according to one embodiment of the present invention. FIG. 6 is a view illustrating a region where a cell terrace (113) of a battery module (10) according to one embodiment of the present invention is located.

Referring to FIGS. 4 to 6, the battery module (10) comprises a busbar frame assembly (200). The busbar frame assembly (200) is configured to electrically connect the plurality of battery cells (110).

The busbar frame assembly (200) may comprise a busbar frame (210) and a busbar (220) serving as means for electrically connecting the battery cells (110) in series and/or in parallel, as illustrated in FIG. 2. The busbar frame assembly (200) may be disposed at the front portion and the rear portion of the cell assembly (100), respectively.

The busbar frame (210) may be provided in a substantially plate-like shape of a size sufficient to cover the front (-Y direction) or the rear (+Y direction) of the cell assembly (100). In addition, the busbar frame (210) may be configured to include a plurality of slits through which the electrode leads (111) of the battery cell (110) may pass in the +Y-axis or -Y-axis direction, and a plurality of busbars (220) may be assembled on the outer surface. Additionally, the busbar frame (210) may be formed of, for example, a plastic material having electrical insulation properties. For example, the busbar frame (210) may comprise PC-abs material.

The busbar (220) may be formed in a bar shape of a metal material, such as copper, aluminum, or nickel, and may serve as an electrically conductive member. Preferably, the busbar (220) may comprise a plurality of pieces. As illustrated in FIG. 3, the electrode leads (111) of the battery cells (110) may extend outward from the busbar frame (210) through the slits of the busbar frame (210). The portion thus drawn out may be joined to a surface of the busbar (220) by welding. For example, the stacked battery cells (110) may be connected in series and/or in parallel with each other by attaching the positive lead of one or more battery cells (110) and the negative lead of one or more other battery cells (110) to the same busbar (220).

Referring again to FIGS. 1 and 2, the module case (300) may be configured to accommodate the cell assembly (100). That is, the module case (300) may be configured to accommodate the cell assembly (100) within its internal space. The module case (300) may have an internal empty space formed therein, and may accommodate the cell assembly (100) in the internal space. The module case (300) may be configured to accommodate the cell assembly (100). The module case (300) may have an open shape on one side and the other side in the longitudinal direction.

The module case (300) may include a base plate (320) extending horizontally, and side plates (330, 340) extending upward from the base plate (320). In this case, the base plate (320) may be configured to have a plate shape extending substantially horizontally. The side plates (330, 340) can be configured to have a plate shape extending in a substantially vertical direction. The base plate (320) and the side plates (330, 340) can be configured to be perpendicular to each other. For example, the module case (300) may be configured as a U-shaped frame.

Meanwhile, the side plates (330, 340) may be provided in the width direction of the battery module (10). That is, the module case (300) may have a form in which side plates (330, 340) are provided in the width direction and one side and the other side in the length direction are open. In another aspect of the present invention, the base plate (320) and the side plates (330, 340) may be configured as an integral body. Alternatively, the base plate (320) and the side plates (330, 340) may be configured to be detachable.

The module case (300) may include a top plate (310). Referring again to FIGS. 1 and 2, the top plate (310) may be positioned on at least one side of the module case (300). Preferably, the top plate (310) may be configured to cover the upper portion of the module case (300). That is, the top plate (310) can be mounted on the upper part of the module case (300). The top plate (310) can cover the cell assembly (100) on the upper part of the module case (300).

In one aspect of the present invention, the top plate (310) can be configured to be detachably connected to the module case (300). The top plate (310) may be configured as an integral part with the module case (300). In this case, the top plate (310) and module case (300) can form a mono frame.

Referring to FIGS. 4 to 6, the battery module (10) may include a potting resin (P). The potting resin (P) can be provided in the space inside the module case (300).

In one aspect of the present invention, a potting resin (P) may be disposed in a space between one end of the cell assembly (100) and the busbar frame assembly (200). Specifically, the potting resin (P) may be disposed on a bottom surface of a space between one end of the cell assembly (100) and the busbar frame assembly (200). More specifically, the potting resin (P) may be included in a region where the cell terrace (113) is provided. The potting resin (P) may be configured to entirely cover one end of the battery cell (110) upon expansion. Preferably, the potting resin (P) may be configured to physically cover the front and rear ends of the battery cell (110) upon expansion.

That is, the potting resin (P) may be disposed in a region opposite to the region facing the end plates (350, 360), based on the busbar frame assembly (200). More specifically, the potting resin (P) may be disposed on a bottom surface of the module case (300) within the space between the busbar frame assembly (200) and the cell assembly (100). The potting resin (P) may be applied to the bottom surface of the module case (300). For example, the potting resin (P) may be applied onto the bottom surface of the module case (300) by, for example, a nozzle.

In another aspect of the present invention, the potting resin (P) may be configured to undergo expansion upon mixing with a curing agent. For example, the potting resin (P) may include a component having refractory properties. In particular, in the case of highcapacity High-Ni, there is concern regarding transfer between cell terraces (113) due to venting explosive force. Therefore, it is preferable to apply a fire-resistant potting resin (P) between each cell terrace (113) as in the present invention. Additionally, the potting resin (P) may include a two-component resin configured to expand upon mixing with a curing agent.

According to this configuration, by applying an appropriate amount of potting resin (P) within the battery module (10), the potting resin (P) may effectively prevent venting gas and/or flame from propagating to an adjacent battery cell (110) by filling the space between the cell terraces (113) after expansion.

In one aspect of the present invention, the potting resin (P) may be configured to physically block the entirety of one end of the battery cell (110) when expansion is complete. For example, the potting resin (P) may be configured to physically block the front and rear ends of the battery cell (110) when expansion is complete. Preferably, the potting resin (P) may be configured to physically block the cell terrace (113) of the battery cell (110) when expansion is complete. That is, upon completion of expansion, the potting resin (P) may completely cover the front and rear ends of the battery cell (110), thereby preventing gas and/or flame generated inside the battery cell (110) from being discharged through the cell terrace (113) region.

Specifically, after welding between the electrode lead (111) of the battery cell (110) and the busbar (220) is completed, the semi-finished product may be assembled into the module case (300), and a mixing nozzle (N) may be inserted between the cell terraces (113) to apply the potting resin (P) onto a bottom surface of the module case (300). In this case, when an appropriate amount of potting resin (P) is applied, the potting resin (P) may expand, thereby filling the space where the cell terrace (113) is located.

In this regard, a secondary battery may generate gas as a side reaction during charging and discharging. In particular, when a large amount of gas is generated during overcharge or discharge, the internal pressure may increase significantly, causing swelling. If this worsens, the bonding strength of the heat-sealed sealing portion may weaken, thereby causing the part to tear and venting gas to be emitted. In this case, among the sealing portions of the battery cell (110), the cell terrace (113) portion where the electrode lead (111) is joined may have relatively lower bonding strength and higher temperature compared to other portions. Therefore, when the internal pressure of the battery cell (110) increases, the cell terrace (113) region is most likely to be damaged. Accordingly, in one embodiment of the present invention, the battery module (10) may physically block venting gas and/or flames generated toward the cell terrace (113) by means of the potting resin (P), and may guide the venting toward an upper portion of the module. In particular, since there is a possibility that heat transfer between terraces may occur due to the explosive force of venting, it is preferable to apply a fire-resistant potting resin (P) between the cell terraces (113) of each battery cell (110).

According to this configuration, in a situation where, for example, a high-temperature gas or the like is emitted from a "trigger" battery cell (110) in which a thermal event has occurred among the battery cells (110), the high-temperature gas or the like may be blocked by the refractory potting resin (P) covering the cell terrace (113) region and may be guided to be discharged toward the venting portion, which is a side edge portion opposite to the folded side and intersecting the front and rear edge portions of the sealing portion. Accordingly, it is possible to prevent thermal damage from being inflicted on other battery cells (110) adjacent to the trigger battery cell (110). That is, propagation of heat energy between the battery cells (110) may be delayed.

In addition, a large amount of gas may be rapidly discharged to the outside of the battery module (10), thereby preventing the internal pressure of the battery module (10) from rapidly increasing and causing explosion or collapse. That is, if gas, flame, particles, or the like are explosively discharged from a battery cell (110) in which a thermal event has occurred under conditions of high temperature and pressure, the thermal damage incurred by the other surrounding battery cells (110) is substantial. The potting resin (P) may serve as means for preventing such a situation and may enable gas or heat energy of the battery cell (110) to be discharged toward a venting hole of the module case (300) at a reduced temperature and pressure.

In addition, according to the above-described configuration, it is possible to physically block flames generated toward components such as terminals or connectors provided on the end plates (350, 360). Accordingly, according to the above-described configuration, a short circuit caused by spatter and electrode discharge may be prevented. In addition, according to the above-described configuration, structural collapse of the end plates (350, 360) may be prevented. Furthermore, according to the above-described configuration, thermal propagation to a module located on the opposite side of the battery module (10) in the longitudinal direction inside the battery pack may be effectively prevented.

Referring again to FIGS. 1 and 2, the battery module (10) may include end plates (350, 360).

The end plates (350, 360) can be provided at both ends in the longitudinal direction of the module case (300). The end plates (350, 360) can be coupled to one side and the other side in the longitudinal direction of the module case (300). That is, the end plates (350, 360) can be coupled to the front and rear of the module case (300). The end plates (350, 360) can be configured to cover both longitudinal ends of the cell assembly (100). More specifically, the end plates (350, 360) may include a front end plate (350) and a rear end plate (360). The end plates (350, 360) can be configured to be coupled to one side and the other side in the longitudinal direction of the module case (300) to cover one end in the longitudinal direction of the cell assembly (100). The end plates (350, 360) may include a plastic material. For example, the end plates (350, 360) may include a PC-abs material.

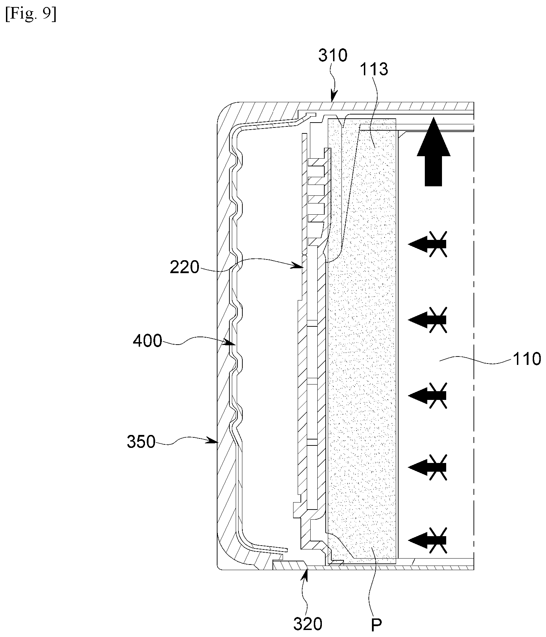

Referring to FIG. 9, the battery module (10) may include an isolation cover (400).

The isolation cover (400) can be interposed between the busbar frame assembly (200) and the end plate (350, 360). The isolation cover (400) may be configured to be in close contact with the inner surface of the end plates (350, 360). The isolation cover (400) can be configured to be structurally coupled to the end plates (350, 360). The isolation cover (400) may include, for example, plastic and/or resin material. For example, the isolation cover (400) may include a PC-abs material.

The isolation cover (400) may be provided on the outside of the busbar frame assembly (200). For example, the electrode lead (111) protruding in the front-rear direction of the battery cell (110) may be fixed to the busbar frame (210) through a lead slit of the busbar frame assembly (200). That is, a cell block may be formed in which a plurality of cell assemblies (100) are combined with the busbar frame assembly (200), and an isolation cover (400) may be mounted in the front and rear directions of the cell block. Subsequently, the end plates (350, 360) may be mounted in the front and rear directions of the isolation cover (400).

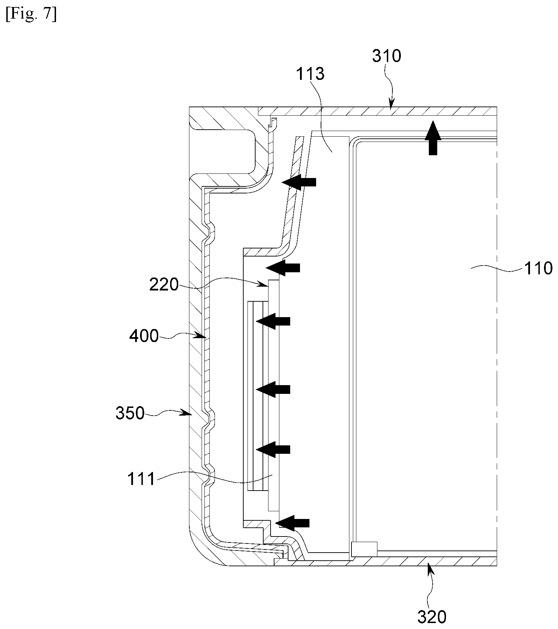

FIG. 7 is a comparative example of the present invention. That is, FIG. 7 shows a conventional battery module (10).

Referring to FIG. 7, in a conventional battery module (10), a potting resin (P) is not provided in the area where the cell terrace (113) is located. Accordingly, when venting gas is generated inside the battery cell (110), the venting gas may be discharged through a sealing portion of the pouch. Specifically, the venting gas may be discharged not only through the venting portion located at a side edge portion opposite the folded side that intersects the front and rear edge portions, but also through the cell terrace (113), which is the sealing portion on the side where the electrode lead (111) protrudes.

In this case, the venting gas is discharged toward the busbar frame assembly (200) and/or the end plates (350, 360) and/or the isolation cover (400), including plastic material. Accordingly, when thermal runaway of a battery cell (110) occurs within a battery module (10), there is a risk that the busbar frame assembly (200) and/or end plates (350, 360) and/or isolation cover (400) located at the front and rear of the battery module (10) may melt due to venting gas discharged through the cell terrace (113). Accordingly, molten particles and the like may be discharged outside the battery module (10), thereby causing thermal propagation within the battery pack.

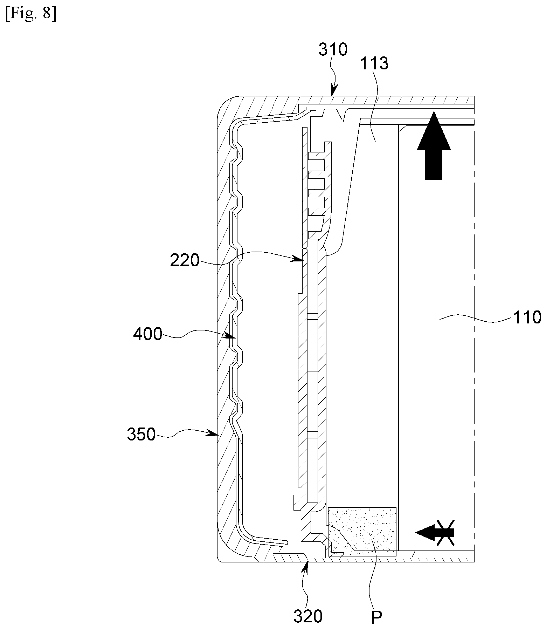

FIG. 8 is a view illustrating a state of a potting resin (P) before expansion in a battery module (10) according to one embodiment of the present invention, and FIG. 9 is a view illustrating a state of a potting resin (P) after expansion in a battery module (10) according to one embodiment of the present invention.

According to the present invention, as shown in FIG. 8, the potting resin (P) that generates expansion force when mixed with a hardener may be injected only partially compared to the total height of the battery module (10). Thereafter, as shown in FIG. 9, the potting resin (P) may be expanded to correspond to the total height of the battery module (10). That is, the present invention may configure a battery module (10) by applying a potting resin (P) that generates expansion force when mixed with a hardener to a bottom surface of a module case (300) using a mixing nozzle (N). According to this configuration, after applying an appropriate amount of potting resin (P), the potting resin (P) may expand and fill the cell terrace (113) space, thereby preventing venting gas and/or flame from spreading to adjacent battery cells (110).

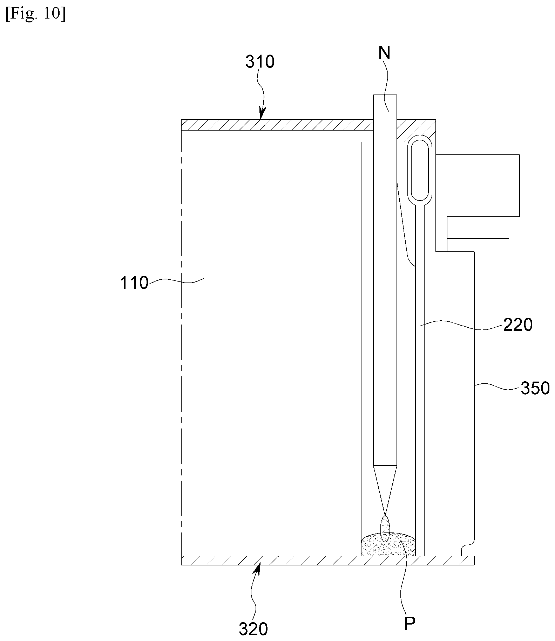

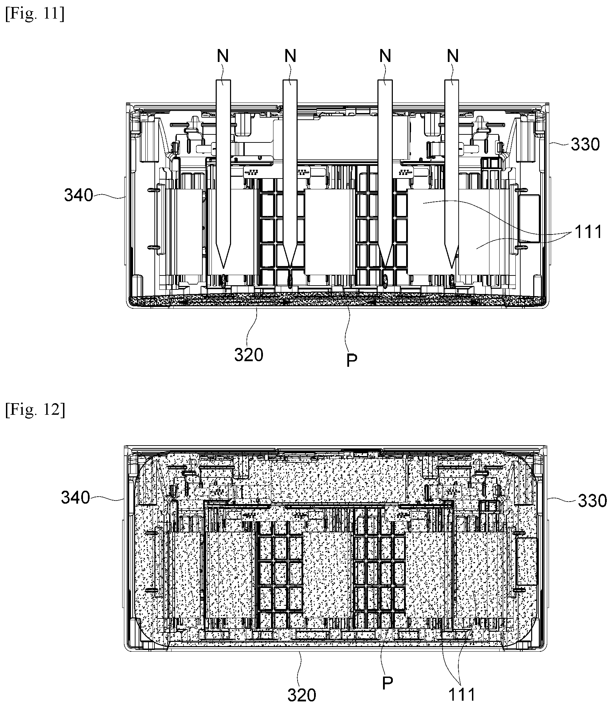

FIG. 10 is a view illustrating a process of injecting potting resin (P) into a battery module (10) according to one embodiment of the present invention, and FIG. 11 is a view illustrating a process of injecting potting resin (P) into a battery module (10) according to one embodiment of the present invention from a direction different from that shown in FIG. 10. FIG. 12 is a view illustrating a state after expansion of the potting resin (P) included in the battery module (10) according to one embodiment of the present invention.

Referring to FIGS. 10 to 12, a method for manufacturing a battery module (10) according to one embodiment of the present invention comprises: a first step of fixing a plurality of battery cells (110) to a busbar frame assembly (200); a second step of mounting the plurality of battery cells (110) and the busbar frame assembly (200) to a module case (300) of the battery module (10); a third step of coupling end plates (350, 360) to the front and rear of the module case (300); and a fourth step of applying a potting resin (P) configured to expand when mixed with a curing agent to the bottom surface of the module case (300) through a mixing nozzle (N).

In this case, the mixing nozzle (N) may be introduced into an area in which the cell terrace (113) is provided on the lead side of the battery cell (110). The mixing nozzle (N) can be configured to be insertable between the cell terraces (113). The mixing nozzle (N) may be a mixing nozzle (N) capable of mixing a two-component resin.

In the first step, welding of the electrode lead (111) is completed to form a semi-finished product. Afterwards, in the second step, the semi-finished product is assembled into the module case (300). In the fourth step, a potting resin (P) that generates an expansion force when mixed with a curing agent is applied to the bottom surface of the module case (300) by inserting a nozzle between the cell terraces (113). That is, the application process is carried out within the assembly process of the battery module (10). The potting resin (P) can be applied to the bottom surface of the module case (300) using a mixing nozzle (N). Afterwards, the potting resin (P) expands and fills the cell terrace (113) space.

Accordingly, the transfer of venting gas and/or flame to adjacent battery cells (110) can be prevented. That is, according to the above configuration, the battery module (10) can be a top venting battery module (10). Accordingly, the transfer of gas and/or flame from a battery cell (110) in which a thermal event has occurred to an adjacent battery cell (110) may be effectively prevented. Additionally, by virtue of the above configuration, heat release from the front and rear surfaces of the battery module (10) may be suppressed. Accordingly, melting of the busbar frame (210) can be prevented. As a result, the above configuration can delay and reduce thermal propagation and/or heat transfer within the battery pack.

Ultimately, according to the above configuration, smooth top venting may be achieved by inducing directional venting when thermal runaway occurs in the battery module (10). In addition, according to the present invention, flames directed toward terminals and the LV connector may be physically blocked, thereby preventing short circuits caused by spatter or electrode discharge and avoiding structural collapse of the end plates (350, 360). Furthermore, according to the present invention, it is possible to prevent thermal propagation (TP) within a battery pack by preventing thermal propagation from a battery module (10) located on the opposite side in the longitudinal direction of the battery pack.

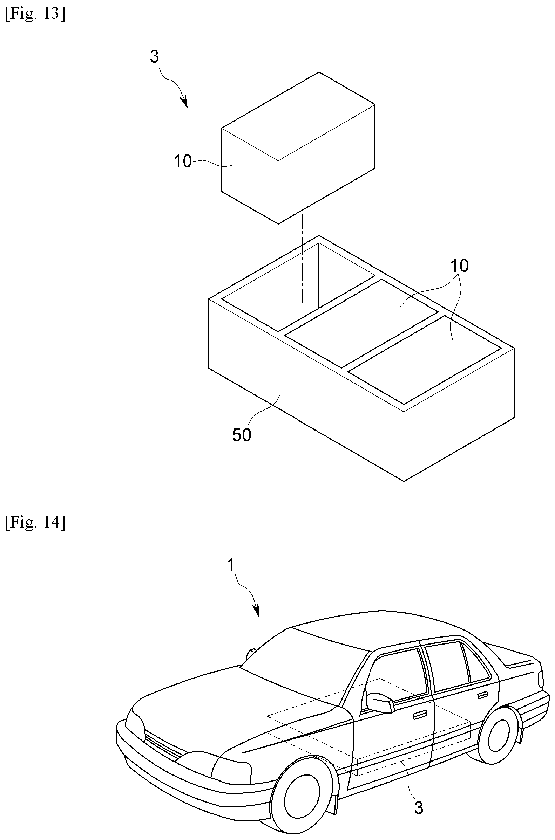

FIG. 13 is a view illustrating a battery pack (3) including the battery module (10) according to one embodiment of the present invention.

Referring to FIG. 13, a battery pack (3) according to one embodiment of the present invention may include a battery assembly in which a plurality of battery modules (10) according to one embodiment of the present invention are electrically connected, and a pack case (50) configured to accommodate the battery assembly. In the drawings of the present invention, for convenience of illustration, components such as bus bars, cooling units, and power terminals for electrical connection are omitted. In addition, the battery pack (3) may further comprise various components known at the time of filing of the present invention, such as a battery management system (BMS), a pack case (50), a relay, and a current sensor.

FIG. 14 is a view illustrating a vehicle including the battery pack (3) of FIG. 13.

Referring to FIG. 14, a vehicle (5) according to one embodiment of the present invention may be, for example, an electric vehicle, a hybrid vehicle, or a plug-in hybrid vehicle, and may include the battery pack (3) according to one embodiment of the present invention. The vehicle (5) includes a four-wheeled vehicle and a two-wheeled vehicle. The vehicle (5) operates by receiving power from a battery pack (3) according to one embodiment of the present invention. In addition, the vehicle (5) according to the present invention may further include various other components included in the vehicle in addition to the battery cell (1) or battery pack (3). For example, in addition to the battery cell (1) according to the present invention, the vehicle (5) according to the present invention may further include a vehicle body, a motor, and control units such as an electronic control unit (ECU).

Meanwhile, although terms indicating directions such as up and down are used in this specification, it is obvious to those skilled in the art that these terms are only for convenience of explanation and may vary depending on the location of the target object or the location of the observer.

While the present invention has been described with reference to the limited embodiments and the accompanying drawings, the present invention is not limited thereto, and it is to be understood that various modifications and variations can be made by those of ordinary skill in the art to which the present invention pertains within the technical spirit of the present invention and the scope of the appended claims and their equivalents.

## Claims

1. A battery module, comprising: a cell assembly comprising a plurality of battery cells;
a busbar frame assembly electrically connecting the plurality of battery cells; a module case accommodating the cell assembly; and
a potting resin provided on a bottom surface of a space between one end of the cell assembly and the busbar frame assembly,
the potting resin configured to expand when mixed with a curing agent.

2. The battery module of claim 1, wherein
the battery cell comprises:
an electrode assembly;
a receiving portion for receiving the electrode assembly;
a sealing portion formed around a periphery of the receiving portion; and
a pair of electrode leads connected to the electrode assembly and extending outward from the sealing portion.

3. The battery module of claim 2, wherein
the sealing portion includes a cell terrace, which is a sealing portion on the side from which the pair of electrode leads protrude.

4. The battery module of claim 3, wherein
venting gas is configured to be discharged only to an area of the sealing portion of the battery cell, excluding the cell terrace.

5. The battery module of claim 1, wherein
the busbar frame assembly comprises:
a busbar frame disposed at least at one of a front portion and a rear portion of the cell assembly and having a plurality of slits through which electrode leads of the battery cells can pass; and
a busbar made of an electrically conductive material and configured to be welded to the electrode leads that extend outward from the busbar frame through the plurality of slits of the busbar frame.

6. The battery module of claim 3, wherein
the potting resin
is included in an area where the cell terrace is provided.

7. The battery module of claim 1,
wherein the potting resin is a two-component resin having fire resistance.

8. The battery module of claim 1,
wherein the potting resin is configured to physically block the entirety of one end of the battery cell when expansion is complete.

9. The battery module of claim 1,
further comprising end plates coupled to a front and a rear of the module case.

10. A method for manufacturing a battery module, the method comprising:
a first step of securing a plurality of battery cells to a busbar frame assembly;
a second step of mounting the plurality of battery cells and the busbar frame assembly into a module case of the battery module;
a third step of joining end plates to a front and a rear of the module case; and
a fourth step of applying a potting resin configured to expand when mixed with a curing agent to a bottom surface of the module case
through a mixing nozzle.

11. The method of claim 10,
wherein the mixing nozzle is injected into an area where a cell terrace provided on an electrode lead side of the battery cell is located.

12. A battery pack, comprising at least one battery module according to any one of claims 1 to 9.

13. A vehicle, comprising at least one battery pack according to claim 12.
